# EUROPEAN PATENT SPECIFICATION

(11) **EP 0 377 124 B1**
(45) Date of publication and mention of the grant of the patent: **22.02.1995**
(21) Application number: 89122358.8
(22) Date of filing: 05.12.1989
(51) Int. Cl.: B23F 9/00, B23F 19/00

(54) **Improved method of making ring gear and ring gear therefrom**
Verfahren zur Herstellung von Tellerrädern und nach diesem Verfahren hergestelltes Tellerrad
Procédé pour la fabrication de roues dentées en forme d'anneau et roue fabriquée selon ce procédé

(30) Priority: 06.01.1989 US 294072
(43) Date of publication of application: 11.07.1990
(73) Proprietor: EATON CORPORATION, Cleveland, Ohio 44114 (US)
(72) Inventor: Kovach, Joseph Allan, Aurora Ohio 44202 (US); McCartney, Dale Bruce, Painesville Ohio 44077 (US)
(74) Representative: Wagner, Karl H., Dipl.-Ing.

(56) References cited:
- EP-A- 0 022 586
- EP-A- 0 074 462
- EP-A- 0 278 361
- DE-A- 1 558 022
- GB-A- 0 991 826
- SU-A- 0 631 275
- SU-A- 0 848 200
- US-A- 1 572 624
- US-A- 1 811 254
- US-A- 3 891 407
- BULLETIN OF JSME, vol. 28, no. 240, June 1985 TOKYO (JP) pages 1301-1307 S. SHIMACHI ET AL.:"A Study on NC Gear Cutting of Large-size Bevel Gears, 3rd Report ; A Method to save path number of the cutter in tooth generation".

## Description

This invention relates generally to an improved method for making a ring gear according to the precharacterising part of claim 1 (see EP-A-0 022 586) and more particularly to an improved method for making a ring gear having forged and/or rough-cut teeth that are machined by a rotary tool in a manner that advantageously eliminates the need to normalize or otherwise modify the microstructure of the metal from which the ring gear is made.

### BACKGROUND OF THE INVENTION:

Ring gears have long been used in vehicle differentials for transferring torque to a wheel axle from a rotating drive shaft and commonly have pitch diameters ranging up to 45.7 cm (18 inches) or more in heavy duty truck differentials.

Due to characteristically large size and the criticality of such application, ring gears are commonly forged from steel rather than cast so as to provide them with strength and durability.

Over the years, the art of forging gears, including ring gears, has advanced to the point where they are able to be "near-net" forged meaning that the teeth are able to be formed to less than about 0.18 cm (.070 inch) of the finished dimensions desired for the functional surfaces such as, for example, disclosed in United States Patent 4,761,867 assigned to the assignee of the present invention and the disclosure of which is incorporated herein by reference.

Ring gears of the type herein concerned have a plurality of teeth either of the spiral bevel type or hypoid type well know to those skilled in the art that are circumferentially evenly spaced about the central rotational axis of the gear and face in a direction acutely away therefrom. Each tooth features a pair of spaced-apart side walls extending from and following opposite edges of a bottom surface extending therebetween defining a tool path having a median radius of curvature "R" in a plane that is substantially parallel to the bottom surface of the tooth and substantially transverse to the rotational axis of the gear.

Ring gear teeth characteristically have what is known in the trade as Gleason Formate geometry, i.e., a tooth having straight side walls extending angularly away from each other from opposite edges of a bottom surface extending therebetween along a tool path having a median radius of curvature "R" in a plane substantially parallel to the bottom surface and transverse to the rotational axis of the ring gear.

Heretofore, such ring gears have been machined with specialized Gleason equipment having a machining tool featuring formed cutting blades or teeth deployed about and extending transversely from the perimeter of a rotary plate having a diameter of 2R. Although recently improved, such tools have been generally expensive; are difficult to sharpen; are slow in operation; and characteristically require long set-up times.

Ring gears are commonly forged from low to medium carbon and alloy steel such as AISI 8620A, 8622A, 8625A, 8822A, 4817H and 9310A having a carbon content of about .05% to about 0.5% by weight. It has also heretofore been standard practice to subject the forged ring gear to normalizing heat treatment or other microstructure modification processes after forging and before machining in order to enhance machinability by promoting more uniform grain size and essentially eliminating Bainitic Ferrite or "Widmanstatten" grain structure adjacent the surface to be machined.

In view of the foregoing, a need has existed for some time to provide a method for machining forged and/or rough-cut ring gear teeth that utilizes conventional equipment, is faster, is less expensive, and eliminates the practice heretofore of normalizing or otherwise modifying the ring gear microstructure prior to machining.

### SUMMARY OF THE INVENTION:

Accordingly, it is an object of this invention to provide an improved method for machining forged and/or rough-cut teeth of a forged ring gear.

It is another object of this invention to provide an improved method for machining forged and/or rough-cut ring gear teeth that employs conventional equipment and eliminates the practice heretofore of subjecting the ring gear to normalizing heat treatment or other microstructure modification process prior to machining.

It is yet another object of this invention to provide a ring gear made by an improved process by which forged and/or rough-cut teeth of the ring gear are machined.

These objects are achieved by a method comprising the steps of claim 1.

### BRIEF DESCRIPTION OF THE DRAWINGS:

FIGURE 1 is a cross-sectional view of a vehicular differential utilizing a ring gear 40 made in accordance with the invention;
FIGURE 2A is a view of a spiral bevel ring gear taken along view line 2-2 of FIGURE 1;
FIGURE 2B is a view of a hypoid ring gear 40 taken along view line 2-2 of FIGURE 1;
FIGURE 3 is a perspective view of one tooth 8 of the ring gear 40 of Figure 1;
FIGURE 4 is a cross-sectional view of ring gear teeth 8 taken along view line 4-4 of Figure 3;
FIGURE 5 is a schematic side view of the prior art method of machining a forged ring gear 40;
FIGURE 6 is a schematic side view of the method of the invention for machining forged and/or rough-cut ring gear 40; and
FIGURE 7 is a block diagram of an embodiment of the method of the invention for providing a finalized ring gear.

### DESCRIPTION OF SOME PREFERRED EMBODIMENTS:

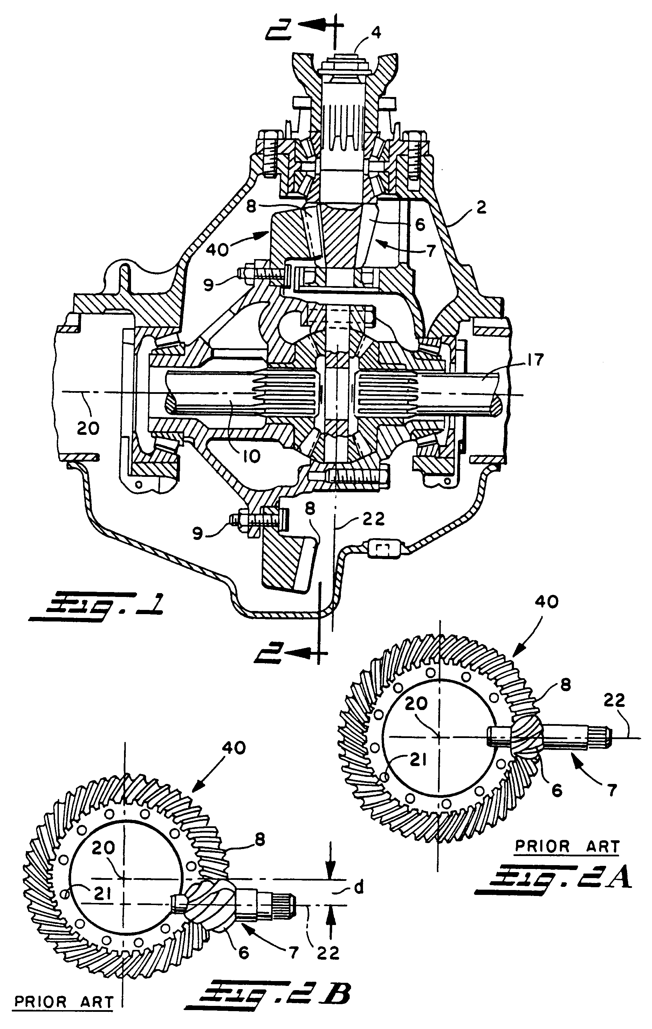

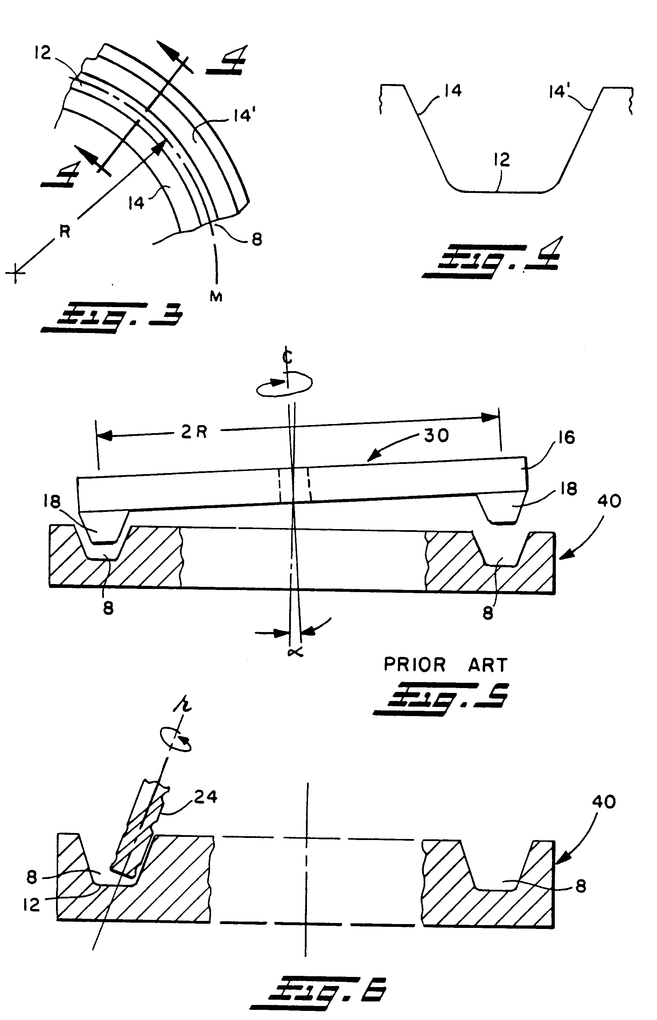

In FIGURE 1, ring gear 40 is journaled for rotation on a vehicular differential housing 2 and is drivingly connected to a rotary wheel axle 10 which is drivingly connected to the other wheel axle 17 by means of differential gearing well known to those skilled in the art. Ring gear 40 has a plurality of curved teeth 8 circumferentially evenly spaced about its periphery that are described in greater detail with respect to Figures 2A through 4.

Teeth 8 are meshingly engaged with teeth 6 of pinion gear 7 which is rotated by drive shaft 4 which is rotated by the vehicle's power source. As such, ring gears, such as ring gear 40, provide a vital function in transferring torque from a rotating drive shaft such as shaft 4 to rotary wheel axles such as axles 10 and 17.

As shown in FIGURES 2A and 2B, teeth 8 of ring gear 40 are preferably curved as are teeth 6 of pinion gear 7 in order to transfer torque smoothly, quietly and with high efficiency.

In FIGURE 2A, ring gear 40 has spiral bevel teeth meshingly engaged with spiral bevel teeth 6 of pinion gear 7 and in FIGURE 2B, ring gear 40 has hypoid teeth 8 meshingly engaged with hypoid teeth 6 or pinion gear 7. Ring gear 40 is mounted onto a rotary member (not referenced) of the differential contained within housing 2 by means of plurality of bolts 9 shown in FIGURE 1 inserted through openings 21 in ring gear 40 shown in FIGURES 2A and 2B.

The difference between spiral bevel gearing and hypoid gearing is that the central rotational axis 20 of gear 40 transversly intersects central rotational axis 22 of pinion gear 7 in the same plane as shown in FIGURE 2A whereas, for hypoid gearing, the rotational axis 22 of pinion gear 7 is offset from the plane in which axis 20 lies by a distance "d" which is commonly from about 2.54 cm (1.00 inch) to about 5.08 cm (2.00 inches).

Spiral bevel gears tend to provide a more pronounced rolling engagement between each other at the pitch line whereas hypoid gears tend to have a greater degree of sliding relative each other at the pitch line. In recent years, with improvements in gear design and lubrication, sliding contact is not the major problem it once was and hypoid gear sets for heavy duty drive axles have become more acceptable.

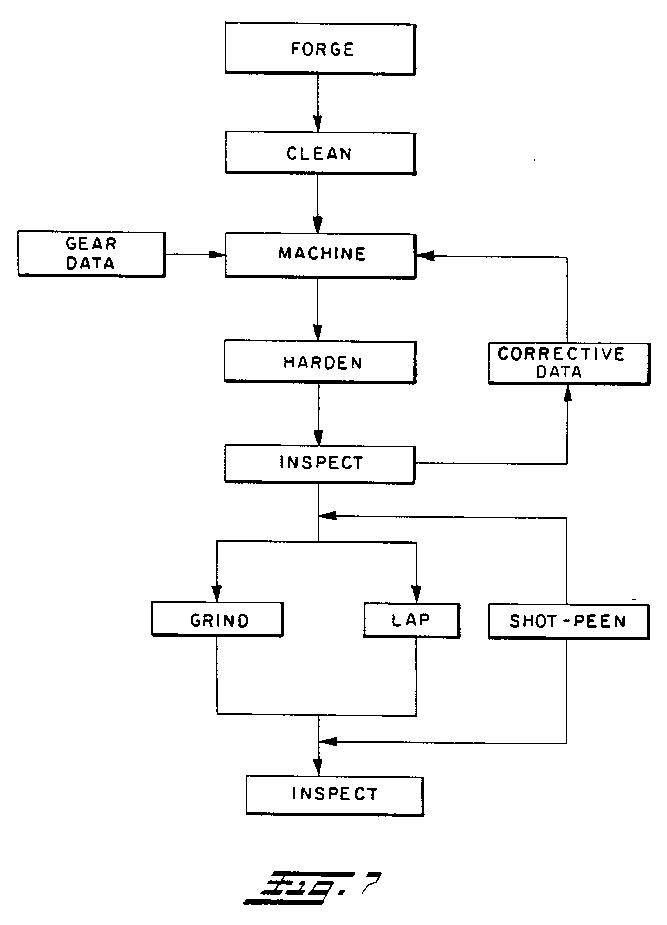

Tooth 8 in FIGURES 3 and 4 has a pair of spaced-apart side walls 14,14' that extend angularly away from each other from opposite edges of bottom surface 12 defining a tool path therealong having a median "M" radius of curvature "R" in a plane substantially parallel to surface 12 and substantially transverse to the central rotational axis of ring gear 40.

As shown in FIGURE 4, side walls 14 and 14′ are preferably straight in a plane substantially transverse to bottom surface 12, yet are curved when viewed in a plane substantially parallel to bottom surface 12. Such curvature is known in the trade as "Gleason Formate" geometry and is commonly employed in ring gear design.

The prior art method of machining ring gears is shown in FIGURE 5 in which a cutting tool 30 of a Gleason Formate ring gear machining device is being used to machine tooth 8. The cutting tool body 30 has a circular plate member 16 having an outside diameter somewhat in excess of twice the radius of curvature of tooth 8. A plurality of circumferentially spaced formed cutting bits or blades 18 extend transversely from member 16 about a circular perimeter of member 16 having a diameter of 2R as shown in FIGURE 5.

Ring gear 40 of FIGURE 5 is a gear having rough-cut or forged, preferably "near-net" forged, teeth 8. Cutting tool 30 is rotated about its rotational axis "C" such that formed bits or cutting blades 18 travel along tooth 8 and machine the sidewall and bottom surface.

Additionally, either tool 30 or ring gear 40 must be tilted relative the other such that their respective rotational axes are inclined a predetermined angle "alpha" relative each other in order to ensure that bits 18 only engage the particular tooth 8 being machined. Ring gear 40 is rotationally indexed to the next tooth after the machining of the preceding tool is completed.

Thus, as previously described, the prior art Gleason Formate ring gear machining equipment involves large circular cutting tools that heretofor have been expensive and require long setup times and are difficult and expensive to sharpen and repair. Gleason equipment further requires swinging of formed cutting bits or blades, a characteristically long distance "R" from the axis of rotation which creates machining problems heretofore virtually mandating that the forged ring gears be subjected to a normalizing heat treatment or other microstructure modification process prior to machining.

Contrary to past and present practice, it has been discovered that a rotary tool can be used to machine forged and/or rough-cut ring gear teeth in the manner shown in FIGURE 6 by rotating about a rotational axis "r" that projectionally intersects bottom surface 12 as tool 24 moves along the tool path defining tooth 8 (which may be a curved path having a median radius of curvature "R" as previously described). Although tool 24 may be any type of rotary tool, it is preferably a rotary milling tool and more preferably a rotary carbide milling tool controlled by an automatic milling machine well known to those skilled in the art such as a computer numerically controlled milling machine (CNC) in which predetermined digitalized information can be stored such as on tape for controlling the movement of tool 24.

It is to be understood that, although tool 24 may be cylindrical such as shown in FIGURE 6 for machining sidewalls of tooth 8 that are straight when viewed in transverse cross-section to provide Gleason Formate ring gear tooth geometry as previously described, tool 24 may be formed to provide other sidewall shapes such as convoluted side walls. It is to be further understood that although the tool path followed by tool 24 is preferably curved so as to provide either a hypoid or a spiral bevel tooth form, the tool path may be any tool path predetermined to provide the kind tooth engagement described between the ring gear and pinion gear and that tool 24 is further not limited to being a cutting tool, such as a rotary milling tool, but may be a grinding tool whose central rotational axis projectionally intersects the ring gear tool path as herebefore described.

Thus, a rotary tool such as a rotary carbide milling tool can be employed to mill forged and/or rough-cut ring gear teeth that heretofore was thought to be limited exclusively to Gleason type machining equipment. Preferably, the teeth are "near-net" forged such that the rotary tool is required to remove less than about 0.18 cm (.070 inch) from the sidewalls of each ring gear tooth.

It has further been discovered that the use of a rotary tool rotating about a rotational axis that projectionally intersects the bottom surface of the tool path places the tool rotational axis closely adjacent the sidewall being machined which essentially eliminates the need for normalizing heat treatment or other microstructure modification process prior to machining to eliminate "Widmanstatten" grain structure and Bainitic Ferrite as previously described.

FIGURE 7 shows a preferred embodiment of a method of making a finished ring gear in accordance with the invention in which the most pertinent steps are that the ring gear first be forged, with the teeth preferably "near-net" forged, and then machined with a rotary tool in the manner hereinbefore described, hardened, after which the working surface of the teeth are either finished ground or lapped and then may be shot-peened after grinding or lapping prior to final inspection or, in some instances, before grinding or lapping, such as for example, where the root and side walls of the tooth are first shot-peened afterwhich only the side walls are ground.

More particularly, the method of Figure 7 further includes cleaning after forging and placing gear design input data into the machine memory system to which corrective inspection data adjustments can be made upon inspection after hardening of the machined ring gear prior to finish grinding or lapping.

The method of FIGURE 7 completely eliminates the prior art use of Gleason Formate ring gear machining equipment as well as the prior art practice of having to subject the forged ring gear to any normalizing heat treatment or other microstructure modification process prior to machining.

As previously described, ring gears are characteristically made from suitable alloy steels well known to those skilled in the art. When the steel is a high carbon steel, the ring gear surface can be contour induction hardened between the machining and grinding operations. When the steel is a low carbon steel, the surface of the ring gear can be hardened by standard carburizing procedures well known to those skilled in the art.

## Claims

1. A method for machining a forged or rough-cut ring gear (40) tooth (8) having a pair of spaced-apart sidewalls (14,14') respectively extending from opposite edges of a bottom surface (12) extending therebetween and defining a curved tool path extending therealong having a median radius of curvature "R" in a plane substantially parallel to the bottom surface, said tooth being machined by a rotary tool (24) rotating about a central rotational axis (r) characterized in that said axis (r) projectionally intersects the bottom surface (12) i.e. said axis (r) extends substantially parallel to the sidewall (14, 14') to be machined whilst following the curved tool path therealong.

2. The method of Claim 1 wherein the sidewalls (14,14') are substantially straight and extend from the bottom surface (12) angularly away from each other in a plane substantially transverse to said tool path providing the tooth (8) with a substantially Gleason Formate type geometry.

3. The method of Claim 1 wherein the ring gear (40) is made from a metal that has not been normalized at least prior to the machining thereof by the rotary tool (24).

4. The method of Claim 1 wherein the forged ring gear (40) is a near-net forged ring gear.

5. The method of any of the preceding claims wherein following the machining of the forged teeth (8) at least one step of (i) grinding or (ii) lapping the teeth (8) is provided.

6. The method of Claim 5 including the step of shot-peening the teeth (8) before or after the grinding or lapping step.

7. The method of Claim 1 or 5 wherein the rotary tool is a rotary milling tool.

8. The method of Claim 1 or 5 wherein the rotary is a rotary grinding tool.

9. The method of Claim 7 wherein the rotary milling tool is a rotary carbide milling tool.

## Patentansprüche

1. Verfahren zur Bearbeitung eines geschmiedeten oder grob-geschnittenen Ring- oder Tellerrad- (40) Zahnes (8) mit einem Paar von beabstandeten Seitenwänden (14, 14'), die sich jeweils von gegenüberliegenden Kanten einer Bodenoberfläche (12) erstrecken, die sich dazwischen erstreckt und einen kurvenförmigen Werkzeugpfad definiert, der sich dort entlang erstreckt mit einem mittleren Krümmungsradius "R" in einer Ebene im wesentlichen parallel zu der Bodenoberfläche, wobei der Zahn bearbeitet wird durch ein Drehwerkzeug (24), das sich um eine mittlere Drehachse (r) dreht,
dadurch **gekennzeichnet,** daß die Achse (r) projektionsmäßig die Bodenoberfläche (12) schneidet,
d. h. die Achse (r) erstreckt sich im wesentlichen parallel zu der zu bearbeitenden Seitenwand (14, 14') während sie dem kurvenförmigen Werkzeugpfad dort entlang folgt.

2. Verfahren nach Anspruch 1, wobei die Seitenwände (14, 14') im wesentlichen gerade sind und sich von der Bodenoberfläche (12) winkelmäßig voneinander weg in einer Ebene im wesentlichen quer zu dem Werkzeugpfad erstrecken, was den Zahn (8) im wesentlichen mit einer Geometrie des Gleason-Formattyps versieht.

3. Verfahren nach Anspruch 1, wobei das Ring- oder Tellerrad (40) aus einem Metall hergestellt ist, das zumindest vor dem Bearbeiten desselben durch das Drehwerkzeug (24) nicht normalisiert wurde.

4. Verfahren nach Anspruch 1, wobei das geschmiedete Tellerrad (40) ein fast auf die Endabmessung geschmiedetes Tellerrad ist.

5. Verfahren nach einem der vorhergehenden Ansprüche, wobei nach dem Bearbeiten der geschmiedeten Zähne (8) mindestens ein Schritt der folgenden vorgesehen ist:
(i) Schleifen oder (ii) Läppen der Zähne (8).

6. Verfahren nach Anspruch 5, wobei das Verfahren den Schritt des Kugelstrahlens der Zähne (8) vor oder nach dem Schleif- oder Läppschritt aufweist.

7. Verfahren nach Anspruch 1 oder 5, wobei das Drehwerkzeug ein Drehfräswerkzeug ist.

8. Verfahren nach Anspruch 1 oder 5, wobei das Drehwerkzeug ein Drehschleifwerkzeug ist.

9. Verfahren nach Anspruch 7, wobei das Drehfräswerkzeug ein Drehcarbidfräswerkzeug ist.

## Revendications

1. Procédé destiné à l'usinage d'une dent (8) forgée ou ébauchée d'un engrenage annulaire (40), ayant une paire de parois latérales (14, 14') mutuellement espacées, s'étendant respectivement à partir des bords opposés d'une surface inférieure (12) s'étendant entre celles-ci et définissant un trajet d'outil incurvé s'étendant le long de cette dernière en ayant un rayon de courbure moyen "R" défini dans un plan pratiquement parallèle à la surface inférieure, ladite dent étant usinée par un outil rotatif (24) tournant autour d'un axe central de rotation (r), caractérisé en ce que ledit axe (r) recoupe par prolongement la surface inférieure (12), c'est-à-dire que ledit axe (r) s'étend pratiquement parallèlement aux parois latérales (14, 14') destinées à être usinées lorsqu'il suit le trajet incurvé de l'outil.

2. Procédé selon la revendication 1, dans lequel les parois latérales (14, 14') sont pratiquement rectilignes et s'étendent à partir de la surface inférieure (12) en formant un angle l'une par rapport à l'autre et en s'éloignant l'une de l'autre dans un plan pratiquement perpendiculaire par rapport audit trajet d'outil donnant à la dent (8) une géométrie essentiellement du type Gleason Formate.

3. Procédé selon la revendication 1, dans lequel l'engrenage annulaire (40) est formé à partir d'un métal qui n'a pas été normalisé, du moins avant l'usinage de celui-ci par l'outil rotatif (24).

4. Procédé selon la revendication 1, dans lequel l'engrenage annulaire (40) forgé est un engrenage annulaire forgé ayant un fini pratiquement parfait.

5. Procédé selon l'une quelconque des revendications précédentes dans lequel on effectue, après l'usinage des dents (8) forgées, au moins une des étapes consistant à meuler (i) ou à roder (ii) les dents (8).

6. Procédé selon la revendication 5, comportant l'étape consistant à grenailler les dents (8) avant ou après l'étape de meulage ou de rodage.

7. Procédé selon la revendication 1 ou 5, dans lequel l'outil rotatif est un outil à fraiser rotatif.

8. Procédé selon la revendication 1 ou 5, dans lequel l'outil rotatif est un outil de meulage rotatif.

9. Procédé selon la revendication 7, dans lequel l'outil à fraiser rotatif est un outil à fraiser rotatif en carbure.
